Europäisches Patentamt

European Patent Office

Office européen des brevets

(11) Veröffentlichungsnummer: **0 376 053**
**A1**

(12) **EUROPÄISCHE PATENTANMELDUNG**

(21) Anmeldenummer: **89122985.8**

(22) Anmeldetag: **13.12.89**

(51) Int. Cl.5: **B60C 23/04, G01L 7/06, G01L 17/00**

(30) Priorität: **24.12.88 DE 3843815**

(43) Veröffentlichungstag der Anmeldung:
**04.07.90 Patentblatt 90/27**

(84) Benannte Vertragsstaaten:
**AT BE CH DE ES FR GB GR IT LI LU NL SE**

(71) Anmelder: **ALLIGATOR VENTILFABRIK GMBH**
**Postfach 1120**
**D-7928 Giengen/Brenz(DE)**

(72) Erfinder: **Bänziger, Fritz**
**Fischergasse 1**
**D-7900 Ulm(DE)**
Erfinder: **Franke, Horst, Prof. Dipl.-Ing.**
**Marderstrasse 20-4**
**D-7080 Aalen(DE)**
Erfinder: **Schmid, Hansjörg, Dipl.-Ing. (FH)**
**Bergfeldstrasse 13**
**D-7087 Essingen(DE)**
Erfinder: **Normann, Norbert, Dr. Dipl.-Phys.**
**Hauptstrasse 384**
**D-7532 Niefern-Öschelbronn(DE)**
Erfinder: **Uhl, Günter, Dr. Dipl.-Ing.**
**Landhausstrasse 45**
**D-7267 Unterreichenbach(DE)**
Erfinder: **Latsch, Reinhard, Dr. Dipl.-Ing.**
**Sunnisheim Ring 43**
**D-6920 Sinsheim(DE)**

(74) Vertreter: **Hiebsch, Gerhard F., Dipl.-Ing. et al**
**Hiebsch & Peege Patentanwälte Postfach**
**464 Erzbergerstrasse 5a**
**D-7700 Singen 1(DE)**

(54) **Vorrichtung mit einem um eine Drehachse bewegten Behälter, insbesondere Vorrichtung zum Messen des Reifendruckes in einem Luftreifen.**

(57) Eine Vorrichtung mit einem um eine Drehachse bewegten Behälter, in den ein mit ihm umlaufendes und relativ zum Behälter bewegtes Organ eingelegt ist, insbesondere Vorrichtung zum Messen des Reifendruckes in einem Luftreifen eines Fahrzeugrades mittels eines vom Reifendruck beaufschlagbaren Faltenbalges (36) od. dgl. Fühlelementes in einem in Abstand zur Radachse um diese drehenden Druckrohr, in welchem ein von dem Fühlelement geführter Gleitkörper (38b) od.dgl. Teil eines Meßelementes relativ zu einem Gegenmeßelement bewegbar angeordnet ist, wird dadurch verbessert, daß zwischen dem Behälter bzw. Druckrohr (30) und dem bewegten Organ bzw. Gleitkörper (38h) an dem radial nach außen weisenden Teil seines Umfanges wenigstens ein reibungsminderndes Rollorgan (54) angeordnet ist, das auf Druckrohr und Gleitkörper bzw. Behälter und Organ abrollt.

Fig. 6

## VORRICHTUNG MIT EINEM UM EINE DREHACHSE BEWEGTEN BEHÄLTER, INSBESONDERE VORRICHTUNG ZUM MESSEN DES REIFENDRUCKES IN EINEM LUFTREIFEN

Die Erfindung betrifft eine Vorrichtung mit einem um eine Drehachse bewegten Behälter, in den ein mit ihm umlaufendes und relativ zum Behälter bewegtes Organ eingelegt ist, insbesondere Vorrichtung zum Messen des Reifendruckes in einem Luftreifen eines Fahrzeugrades mittels eines vom Reifendruck beaufschlagbaren Faltenbalges od.dgl. Fühlelementes in einem in Abstand zur Radachse um diese drehenden Druckrohr, in welchem ein von dem Fühlelement geführter Gleitkörper od.dgl. Teil eines Meßelementes relativ zu einem Gegenmeßelement bewegbar angeordnet ist.

Bei einer Vorrichtung gemäß DE-OS 30 37 722 ist das Fühlelement als Druckgeber mit vom Luftdruck beeinflußbarem Saugkreis an jedem Fahrzeugreifen eines Fahrzeuges festgelegt. Dieser Druckgeber wirkt mit einem festliegenden Aufnehmer zusammen, der an einen freischwingenden Oszillator sowie an eine Auswerteschaltung zur Berechnung und Anzeige des Reifendruckes angeschlossen ist.

Eine derartige Anordnung ist mit sehr hohen Fertigungskosten behaftet, weshalb mit dem Gegenstand der DE-OS 37 34 053 eine Verbesserung vorgeschlagen wird; das Fühlelement soll als Faltenbalg in etwa achsparalleler Bewegungsrichtung angebracht und mit einem in Abhängigkeit vom Reifendruck an der Reifenaußenseite achsparallel verschiebbaren Dauermagneten verbunden sein, wobei der Dauermagnet bei normalem Reifendruck in einer dem Meßwertsensor nahen Stellung ruht und dieser Abstand bei vermindertem Reifendruck größer ist.

Als stationärer Aufnehmer wird ein elektronisches Bauelement vorgeschlagen, welches dank des sog. Halleffektes jeweils senkrecht zu einem fließenden Strom und einem Magnetfeld eine Spannung erzeugt. Der erwähnte Halleffekt geht davon aus, daß in elektrischen Leitern, die sich in einem homogenen Magnetfeld befinden und in denen dazu senkrecht ein elektrischer Strom fließt, senkrecht zum Magnetfeld und senkrecht zum Strom eine Spannungsdifferenz entsteht. Die Größe des Effektes ist vom Leitermaterial abhängig und wird durch die jeweilige Hallkonstante gekennzeichnet.

Es hat sich nun in der Praxis gezeigt, daß bei dem um die Radachse rotierenden Meßwertgeber infolge von -- durch die auftretende Fliehkraft hervorgerufenen -- Reibungskräften zwischen dem Faltenbalg bzw. den Dauermagneten und seinem Halter einerseits sowie dem Druckrohr anderseits die zum Messen erforderlich axiale Bewegung des Dauermagneten behindert werden kann. Die Erfüllung der Forderung eines linearen drehzahlunabhängigen Zusammenhanges zwischen dem Reifendruck und der Bewegung des Meßgebers wird behindert. Hier Abhilfe zu schaffen, ist Ziel der Erfindung.

Zur Lösung dieser Aufgabe führt, daß zwischen Behälter bzw. Druckrohr und bewegtem Organ bzw. Gleitkörper an dem radial nach außen weisenden Teil von dessen Umfang ein reibungsminderndes Rollorgan angeordnet ist.

Im Rahmen der Erfindung liegen zwei Ausgestaltungen; zum einen werden zur Meidung der Gleitreibung Rollkörper zwischen Druckrohr und Gleitkörper in Form von Kugeln, Rollen oder Gleitlagern lose eingebracht, zum anderen wird diese Führung durch Lagerungen des Faltenbalges ergänzt.

So ist nach einem weiteren Merkmal der Erfindung zwischen dem Druckrohr und dem gegebenenfalls hohlen Gleitkörper bzw. Magnethalter zumindest ein Rollkörper -- also eine Kugel, ein zylindrischer Bolzen od.dgl. in eine seiner Form entsprechende Rollnut des einen Reibungs-oder Gleitpartners eingelegt und wird von einer rinnenartigen Ausnehmung des anderen Gleitpartners übergriffen. Der Rollkörper rollt in Bewegungsrichtung des Faltenbalges ab - die Rollreibung ist günstiger als die bisher hier übliche Gleitreibung und vermindert auch den Verschleiß an den Gleitpartneroberflächen. Bei einer besonderen Ausgestaltung ist der Rollkörper in einem der Gleitpartner gehalten und wandert auf einer Fläche des anderen Gleitpartners.

Bei Verwendung von Rollen wird eine linienförmige Berührung erreicht und damit die Flächenpressung gegenüber der Punktberührung im Falle von Kugeln erheblich reduziert.

Bezüglich anderer erfindungsgemäßer Merkmale wird auf die Unteransprüche Bezug genommen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1: ein Federbein eines Karftfahrzeuges mit angeschlossenem Fahrzeugreifen und Reifendruckgeber im Längsschnitt;

Fig. 2: den gegenüber Fig. 1 vergrößerten Reifendruckgeber mit einem Felgenabschnitt des Fahrzeugreifens;

Fig. 3: einen gegenüber Fig. 2 vergrößerten Ausschnitt einer erfindungsgemäßen Ausführung;

Fig. 4: die Ausführung der Fig. 3 in anderer Betriebsstellung;

Fig. 5: den Querschnitt nach Schnittlinie V - V in Fig. 3 durch eine weitere Ausführung des Reifendruckgebers;

Fig. 6: einen Längsschnitt durch eine andere Ausführungsform des Reifendruckgebers.

Ein Fahrzeugrad 10 ist am unteren Teil eines Federbeines 11 eines nicht weiter dargestellten Kraftfahrzeuges festgelegt. Das Federbein 11 endet an einem Spurstangenhebel 12, unterhalb dessen ein Führungsgelenk 13 für einen Querlenker 14 zu erkennen ist.

Das Fahrzeugrad 10 besteht aus einer -- mit einer Radnabe 19 verschraubten und um einen Achszapfen 18 drehbaren -- Radschüssel 20 mit angeschlossenem Felgenring 21, an dessen Felgenhörner 22 sich beidseits eines Felgenbettes 23 Randwulste 26 eines Luftreifens 27 anschmiegen. Dessen Schichtaufbau ist aus Gründen besserer Übersichtlichkeit in der Zeichnung vernachlässigt.

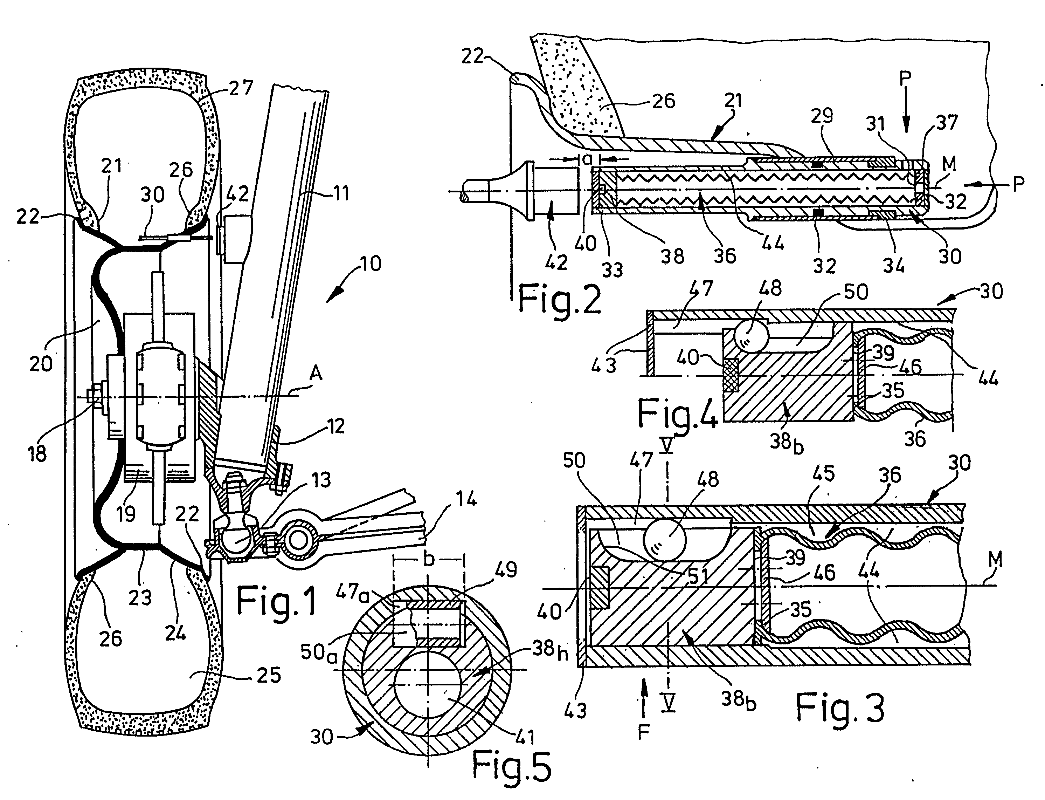

Im Bereich eines stufenartigen Absatzes 24 des zum Federbein 11 weisenden Felgenhornes 22 wird dieses von einem in Fig. 1 etwa zur Achslinie A parallelen Rohr 30 durchsetzt.

Gemäß Fig. 2 ist im Felgenring 21 eine Haltehülse 29 für das als Druckrohr ausgebildete Rohr 30 festgelegt. Zwischen der Haltehülse 29 und dem hier an seinem freien Ende durch Stirnplatten 33, $33_f$ geschlossenen Druckrohr 30 befindet sich ein dichtender O-Ring 32. Das Druckrohr 30 ist durch einen Rastring 34 -- gegebenenfalls aus transluzentem Werkstoff -- in der Haltehülse 29 festgelegt.

In dem zylindrischen Druckrohr 30 verläuft koaxial zu dessen Längsachse M ein Faltenbalg 36 aus Metall, der einends an einem Faltenbalghalter 37 festliegt und -- in Fig 2 über einen axialen Druckrohrdurchbruch 31 -- von innen mit dem Reifendruck P beaufschlagt wird. Hierdurch wird ein am Faltenbalg 36 endwärts in einem verschieblichen Magnethalter 38 befestigter Permanentmagnet 40 in axialer Richtung druckabhängig bewegt. Die Rohrinnenfläche 44 dient bei der Axialbewegung des Magnethalters 38 als Führung.

Karosserieseitig ist bei 42 ein Magnetfeldsensor (Hall-Element) befestigt. Die auf diesen wirkende magnetische Feldstärke ist abhängig von der Distanz a zwischen dem Permanentmagneten 40 und dem Magnetfeldsensor 42. An ihm werden bei rotierendem Reifen Impulse erzeugt, deren Amplitudenhöhe dem Reifendruck proportional ist.

Der bolzenartige Magnethalter $38_b$ nach Fig. 3 stößt in der dort gezeigten Endlage an eine Anschlagplatte 43, die den Rohrinnenraum 45 endwärts abdichtet.

Ein Endwulst 35 des im Druckrohr 30 mit Spiel angebrachte Metallfaltenbalges 36 ist an der Magnethalterstirn 39 druckdicht befestigt.

Zwischen dem Druckrohr 30 und seinem Magnethalter 38 ist im Innenraum 45 zumindest eine Kugel 48 gelagert, die einerseits in einer Rollnut 50 des Magnethalters 38 rollt sowie anderseits in einem in ihrem Querschnitt gebogenen Rinne 47 des Druckrohres 30 geführt wird. Rollnut 50 und Rinne sind einander radial zugeordnet und zwar an der in Fliehkraftrichtung F weisenden Seite des Umfanges von Magnethalter $38_b$. Zumindest die Rollnut 50 ist beidends durch Anschlagflächen 51 begrenzt, die den Rollweg der Kugel 48 bestimmen und damit auch die Länge des Relativweges zwischen Magnethalter $38_b$ und Druckrohr 30.

Beim Ausführungsbeispiel der Fig. 5 ist statt der Kugel 48 eine zylindrische Hohlrolle 49 in eine querschnittlich rechteckige Rollnut $50_a$ des hier aus Gewichtsgründen mit einer Bohrung 41 versehenen Magnethalters $38_h$ eingesetzt. Entsprechend befindet sich im Druckrohr 30 eine Rinne $47_a$ einer Breite b.

Dank jener Kugel 48 oder dieser Hohlrolle 49 als Rollkörper zwischen Druckrohr 30 und Magnethalter $38_b$ an der angegebenen fliehkraftbedingten Stelle ist eine Rollreibung des als Balgführung dienenden Magnethalters $38_b$ -- und damit Reibungsarmut --gewährleistet.

Die Führungspaarung 47/50 bzw. $47_a/50_a$ begrenzt -- wie Fig. 4, 5 erkennen lassen -- die Bewegungsbahn von Kugel 48 oder Rolle 49 und damit den Weg des Dauermagneten 40.

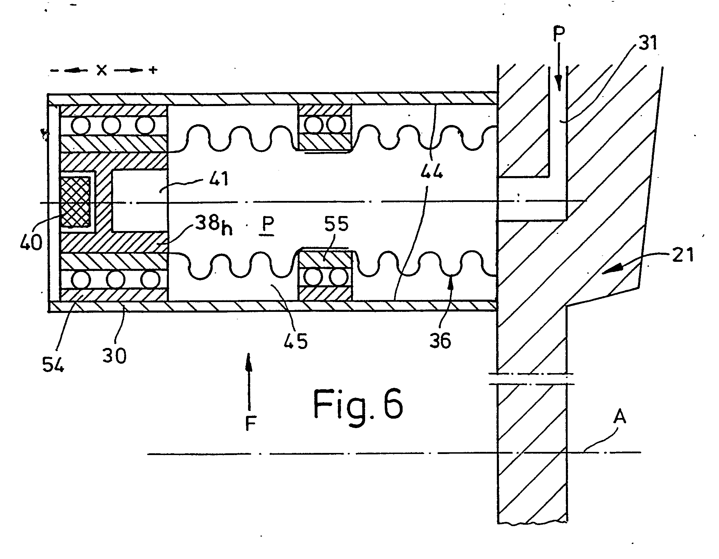

Beim Ausführungsbeispiel der Fig. 6 mit einem zur Gewichtsminderung als Hohlkörper ausgebildeten Magnethalter $38_h$ sind zwischen diesem sowie der Rohrinnenfläche 44 des Druckrohres 30 axial führende Kugellager 54 od.dgl. vorgesehen, die durch Kugellager 55 zwischen Druckrohr 30 und Faltenbalg 36 -- bevorzugt an einer Nahtstelle zwischen zwei Faltenbalgen 36 -- ergänzt sein können.

## Ansprüche

1. Vorrichtung mit einem um einen Drehachse bewegten Behälter, in den ein mit ihm umlaufendes und relativ zum Behälter bewegtes Organ eingelegt ist, insbesondere Vorrichtung zum Messen des Reifendruckes in einem Luftreifen eines Fahrzeugrades mittels eines vom Reifendruck beaufschlagbaren Faltenbalges od.dgl. Fühlelementes in einem in Abstand zur Radachse um diese drehenden Druckrohr, in welchem ein von dem Fühlelement geführter Gleitkörper od.dgl. Teil eines Meßelementes relativ zu einem Gegenmeßelement bewegbar angeordnet ist,
dadurch gekennzeichnet,
daß zwischen dem Behälter bzw. Druckrohr (30) und dem bewegten Organ bzw. Gleitkörper (38; $38_b$; $38_h$) an dem radial nach außen weisenden Teil seines Umfanges wenigstens ein reibungsminderndes Rollorgan (48, 49) angeordnet ist, das auf Druckrohr und Gleitkörper bzw. Behälter und Organ abrollt.

2. Vorrichtung nach Anspruch 1, gekennzeichnet durch eine zwischen dem Druckrohr (30) und dem Gleitkörper (38$_b$) geführte Kugel (48) oder durch einen zwischen dem Druckrohr (30) und dem Gleitkörper (38$_b$) geführten zylindrischen Rollkörper (49), wobei dieser oder die Kugel gegebenenfalls als hohles Rollorgan (48, 49) ausgebildet ist.

3. Vorrichtung nach Anspruch 1 oder 2, dadurch gekennzeichnet, daß das Rollorgan (48, 49) in einer Rollnut (50, 50$_a$) des Gleitkörpers (38$_b$) geführt ist und die Rollnut (50, 50$_a$) parallel zur Druckrohrachse (M) verläuft.

4. Vorrichtung nach Anspruch 3, dadurch gekennzeichnet, daß der Rollnut (50, 50$_a$) eine ·rinnenartige Ausnehmung (47, 47$_a$) in der Druckrohrwandung (44) zugeordnet ist, in die ein Teil des Rollorgans (48, 49) eingreift, wobei gegebenenfalls Rollnut (50$_a$) und Ausnehmung (47$_a$) mit ihren Tiefsten ebene Führungsflächen für den zylindrischen Rollkörper (49) aufweisen.

5. Vorrichtung nach wenigstens einem der Ansprüche 1 bis 4, dadurch gekennzeichnet, daß der relative Weg zwischen der endwärts geschlossenen Rollnut (50, 50$_a$) und der Ausnehmung (47, 47$_a$) durch den an die Rollnutendflächen (51) stoßenden Rollkörper (48, 49) begrenzt ist.

6. Vorrichtung nach einem der Ansprüche 2 bis 5, dadurch gekennzeichnet, daß der Rollkörper (48, 49) in einem der Gleitpartner (30 oder 38) ortsfest drehbar gelagert und im anderen Gleitpartner (38 oder 30) axial verschieblich ist, wobei gegebenenfalls der Rollkörper (48, 49) in einem Gleitpartner (30 oder 38) zwischen Spitzen gelagert ist.

7. Vorrichtung nach wenigstens einem der Ansprüche 2 bis 5, dadurch gekennzeichnet, daß Rollnut (50$_a$) oder Ausnehmung (47$_a$) quer zur Druckrohrachse (M) verläuft und den zylindrischen Rollkörper (49) teilweise aufnimmt, der mit seinem auskragenden Teil in der achsparallelen Ausnehmung bzw. Rollnut als Gegenelement abrollt.

8. Vorrichtung nach wenigstens einem der Ansprüche 1 bis 6, dadurch gekennzeichnet, daß das Rollorgan (48 bzw. 49) in seine Führung (47, 50 bzw. 47$_a$ 50$_a$) lose eingelegt ist.

9. Vorrichtung nach wenigstens einem der Ansprüche 1 bis 8, dadurch gekennzeichnet, daß an der Innenseite (44) des Druckrohres (30) wenigstens ein Rollenlager (54) angebracht und gegen den Gleitkörper (38) abgestützt ist, wobei gegebenenfalls zwischen Druckrohr (30) und Faltenbalg (36) Rollenlager (55) vorgesehen sind.

10. Vorrichtung nach Anspruch 9, dadurch gekennzeichnet, daß das Rollenlager (54, 55) an einer Verbindungsstelle zweier Faltenbalge (36) angebracht ist und/oder axial führend ausgebildet ist.

21

27

26

42

22

30

11

20

10

18

19

23

22

A

12

13

14

26

24

25

**Fig.1**

22

26

21

29

31

37

P

P

M

42

40

33

38

36

44

32

34

30

32

**Fig.2**

47

48

50

30

43

40

39

46

44

35

36

38b

**Fig.4**

50

47

48

45

36

30

40

51

39

46

44

35

43

38b

F

M

**Fig.3**

b

49

47a

50a

38h

30

41

**Fig.5**

EP 0 376 053 A1

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3413209 (ROBERT BOSCH GMBH) <br> * Seite 8, Zeilen 7 - 27; Figur 2 * | 1-3, 8 | B60C23/04 <br> G01L7/06 |
| Y | | 4, 5, 7, 9 | G01L17/00 |
| A | | 6 | |
| | --- | | |
| Y | FR-A-2276187 (DUNLOP LIMITED) <br> * Seite 7, Zeilen 7 - 26; Figur 4 * | 4, 5, 7, 9 | |
| | --- | | |
| A | GB-A-1475068 (LUCAS INDUSTRIES LTD) <br> * Seite 1, Zeilen 81 - 85; Figur * | 1-8 | |
| | --- | | |
| A,D | DE-A-3734053 (ALLIGATOR) <br> * Zusammenfassung; Figur 2 * | 1 | |
| | --- | | |
| A | WO-A-8101688 (SCHRADER) <br> * Zusammenfassung; Anspruch 1; Figuren 1-3 * | 1 | |
| | --- | | |
| A | EP-A-281723 (FFV AUTOTECH) <br> * Zusammenfassung; Figuren 1, 2 * | 9 | |
| | ----- | | |

RECHERCHIERTE SACHGEBIETE (Int. Cl.5 )

B60C
G01L
F16C

Der vorliegende Recherchenbericht wurde für alle Patentansprüche erstellt

| Recherchenort | Abschlußdatum der Recherche | Prüfer |
|---|---|---|
| DEN HAAG | 08 MAERZ 1990 | MYON G.J-P. |